# EUROPEAN PATENT APPLICATION

(11) **EP 4 624 652 A1**
(43) Date of publication of application: **01.10.2025**
(21) Application number: 24905124.4
(22) Date of filing: 25.07.2024
(51) Int. Cl.: D06F 58/22, D06F 58/04, D06F 39/10

(54) **CLOTHES TREATING APPARATUS**

(30) Priority: 05.02.2024 KR 20240017646
(71) Applicant: LG ELECTRONICS INC., Yeongdeungpo-gu Seoul 07336 (KR)
(72) Inventor: KIM, Jeongyun, Seoul 08592 (KR); BAE, Yeeseok, Seoul 08592 (KR); HWANG, Yangguk, Seoul 08592 (KR)
(74) Representative: Vossius & Partner Patentanwälte Rechtsanwälte mbB
(86) International application number: PCT/KR2024/010797
(87) International publication number: WO 2025/170127

(57) **Abstract**

Disclosed is a laundry treating apparatus including a cabinet with an opening defined at a front side thereof, a door that opens and closes the opening and has a door glass, a drum that has an inlet defined therein in communication with the opening and accommodates laundry therein, a driver that is accommodated inside the cabinet and rotates the drum, a circulating duct that circulates air discharged from the inlet outside the drum and re-supplies air to the drum, a heat supplier including one or more heat exchangers that are installed inside the circulating duct and condense moisture from air or heat air, a mounting portion defined to allow the inlet and the circulating duct to be in communication with each other to guide air inside the drum to the circulating duct, and a filter seated in the mounting portion to filter foreign substances introduced into the circulating duct, wherein the door glass is formed to protrude toward the drum and has a pressurizing inclined surface at a protruding lower portion thereof, wherein the filter includes a pressurized portion in contact with the pressurizing inclined surface as the door is closed to pressurize the filter toward the mounting portion.

## Description

### [Technical Field]

The present disclosure relates to a laundry treating apparatus, and more specifically, to a laundry treating apparatus having a filter cartridge for filtering foreign substances in air.

### [Background]

In general, a laundry dryer refers to an apparatus that puts laundry that has been washed and dehydrated into a drum (or a tub) of the dryer and supplies hot air into the drum to evaporate moisture in the laundry and dry the laundry.

Air that escapes after evaporating the moisture of the laundry from the drum of the laundry dryer contains the moisture of the laundry inside the drum, and thus, becomes hot and humid air. In this regard, the dryers may be classified based on a scheme of handling such hot and humid air. In other words, the dryers may be classified into a condensation-type dryer that condenses the moisture contained in hot and humid air by allowing heat exchange to occur in a heat exchanger while hot and humid air circulates without being discharged to the outside of the dryer, and an exhaust-type dryer that discharges hot and humid air that has passed through the drum directly to the outside.

In one example, air coming out of the drum after being used to dry an object-to-be-dried may contain foreign substances such as lint from the object-to-be-dried. Such foreign substances may cause malfunctions as they pass through mechanical components of the laundry dryer or may contaminate outside air when they are discharged to the outside. Therefore, air that has passed through the drum must pass through a filter to remove the foreign substances.

Generally, the filter is disposed in front of the drum and filters the foreign substances contained in air that has passed through the drum. In this regard, when the dryer is used continuously, the foreign substances such as the lint accumulate in the filter.

When such foreign substances accumulate to a level equal to or higher than a certain level, they interfere with a flow of air, so that cleaning is performed regularly. Such cleaning of the filter is performed by a user removing the filter from the laundry dryer after a drying cycle is completed, then removing the foreign substances, and then installing the filter back into the laundry dryer.

However, the above-mentioned cleaning is not only cumbersome because it should be performed by the user by hand, but also not able to be performed every time the drying is performed, so that sufficient air volume necessary for the drying is not able to be secured as the flow of air is gradually interrupted until the cleaning is performed.

As a means to solve such problem, a filter device that automatically cleans the filter continuously in addition to the regular filter cleaning has been developed. Korean Patent Application Publication No. 10-2011-0123346 (publication date: November 15, 2011, name: dryer, hereinafter referred to as "prior art") discloses a filter assembly including a filter cleaner for automatically cleaning the filter.

Such filter cleaner is composed of a brush that is in contact with the filter to clean the lint, and a driving motor for driving the brush. As the brush rotates by a rotational force of the driving motor, the foreign substances on a filter surface are dropped and removed.

However, in the case of prior art, the filter cleaner is mounted at a center of the filter with a symmetrical shape. Accordingly, the filter cleaner rotates along a circular orbit or is driven along a symmetrical reciprocating rotation orbit.

However, in general, the dryer is equipped with the drum at a center of a main body, and a blowing fan that causes the flow of air in the drum mounted next to the drum in the main body. This is to efficiently arrange internal components while minimizing a volume of the dryer.

In this regard, the filter is mounted between the drum and the blowing fan on a flow channel. Therefore, air containing the foreign substances that is discharged from the drum and passes through the filter is affected by the blowing fan. As mentioned above, as the blowing fan is located next to the drum for the space efficiency of the dryer, air passing through the filter also flows biased to one side under the influence of the blowing fan.

Therefore, in a case of the existing symmetrical filter, a portion where the foreign substances such as the lint accumulate is distributed biased from the center of the filter to the blowing fan side. In particular, in a case of an auto filter, the foreign substances that are removed from the filter surface by the brush and accumulate on a bottom surface are concentrated on one side, and a lot of free space is created on the other side.

In other words, in the case of the existing symmetrical filter or auto filter, because a location of the blowing fan is not considered, the filter is not able to be used efficiently, so that the filter should be cleaned early or the air volume is reduced early.

In addition, the filter assembly of the dryer according to the prior art as described above is installed to be inserted into an outlet duct through which air discharged from the drum passes. Such filter assembly may be installed incorrectly in a state of being simply inserted into the outlet duct without an additional support structure or may deviate from an installation location of the outlet duct during operation of the dryer.

In one example, when the filter assembly deviates from the installation location in the outlet duct, foreign substances contained in air flowing through the outlet duct may not be filtered by the filter assembly and may flow into a flow channel of air. The foreign substances introduced into the flow channel of air may accumulate in the flow channel of air and a condenser or an evaporator. As such, when the foreign substances accumulate in the flow channel of air, the condenser, or the evaporator, efficiency of the dryer may be seriously reduced.

Therefore, there is a need for a separate structure that may fix and support the inserted state of the filter assembly such that the filter assembly does not deviate from the installation location in the outlet duct.

### [Summary]

### [Technical Problem]

The present disclosure was created to solve the above problems, and is to provide a laundry treating apparatus that may maintain an installed state of a filter that filters lint that occurs during laundry treatment.

In addition, the present disclosure was created to solve the above problems, and is to provide a laundry treating apparatus that may compress lint loaded in a filter, which filters the lint that occurs during laundry treatment, inside the filter, thereby securing a flow channel of a filter.

In addition, the present disclosure was created to solve the above problems, and is to provide a laundry treating apparatus that may compress lint inside a filter by improving a structure of the filter that filters the lint that occurs during laundry treatment.

### [Technical Solutions]

A laundry treating apparatus according to an embodiment of the present disclosure to achieve the above purpose includes a cabinet with an opening defined at a front side thereof, a door that opens and closes the opening and has a door glass, a drum that has an inlet defined therein in communication with the opening and accommodates laundry therein, a driver that is accommodated inside the cabinet and rotates the drum, a circulating duct that circulates air discharged from the inlet outside the drum and re-supplies air to the drum, a heat supplier including one or more heat exchangers that are installed inside the circulating duct and condense moisture from air or heat air, a mounting portion defined to allow the inlet and the circulating duct to be in communication with each other to guide air inside the drum to the circulating duct, and a filter seated in the mounting portion to filter foreign substances introduced into the circulating duct, the door glass is formed to protrude toward the drum and has a pressurizing inclined surface at a protruding lower portion thereof, the filter includes a support body formed to allow air to be introduced thereinto and extending in an arc shape along a shape of the inlet, and an accommodated body that extends from the support body and filters air, and the laundry treating apparatus further includes a pressurized portion disposed on the support body and in contact with the pressurizing inclined surface as the door is closed to pressurize the filter toward the mounting portion.

In one implementation, a movement groove defined at one side of the support body and guiding a reciprocating movement in an arc shape along the shape of the support body may be defined in the support body, and the filter may include a compressing portion including a rotatable portion that reciprocates along a longitudinal direction of the movement groove, and a brush assembly that is detachably fastened to the rotatable portion inside the support body and rotates inside the accommodated body based on rotation of the rotatable portion to collect lint filtered in the accommodated body.

In one implementation, the rotatable portion may include a rotatable knob extending outward of the support body, and a brush fastening portion extending inward of the support body and fastened with the brush assembly, and the pressurized portion may be disposed on the rotatable knob.

In one implementation, the rotatable knob may include a vertically extending groove defining an ascending and descending space as a top surface thereof is opened, and a support surface forming a bottom surface of the vertically extending groove, and the pressurized portion may include a pressurized portion body inserted into the vertically extending groove in an ascendable and descendable manner, and an elastic rib elastically supporting the pressurized portion body with respect to the support surface.

In one implementation, the pressurized portion body may be formed with a pressurized surface forming an inclined surface parallel to the pressurizing inclined surface.

In one implementation, the vertically extending groove may have a locking groove having a length corresponding to an ascending and descending distance of the pressurized portion body defined in an inner circumferential surface thereof, and a locking protrusion inserted into the locking groove and restricted in the ascending and descending distance may be formed on the pressurized portion body.

In one implementation, the support body may include an open surface allowing air and lint to be introduced into the support body, and multiple blocking ribs arranged in a form of a mesh formed on the open surface.

In one implementation, the pressurized portion may be formed at one side of the support body to protrude integrally with the support body in a curved shape convex toward the blocking rib.

In one implementation, the pressurized portion may include a pressurized portion body curved and protruding toward the pressurizing inclined surface, and an inserted protrusion inserted into a space between an end of the pressurized portion body and the blocking rib.

In one implementation, a tip of the pressurized portion body may be formed as an elastic rib having a predetermined elastic force, and a pressurized surface in contact with the pressurizing inclined surface may be formed at a top surface of the pressurized portion body.

In one implementation, the inserted protrusion and the blocking rib may be spaced apart from each other by a predetermined spacing.

In one implementation, the pressurized portion may be fastened to a space defined between the blocking ribs.

In one implementation, the pressurized portion may include a pressurized portion body seated on the blocking rib, a fixed rib extending from a lower portion of the pressurized portion body and fixed to the blocking rib, and an elastic rib extending from one side of the pressurized portion body in a curved shape convex toward the pressurizing inclined surface.

In one implementation, the pressurized portion body may have a length relatively greater than a length of the space defined between the blocking ribs.

In one implementation, a locking protrusion mounted on the blocking rib may be disposed at an end of the fixed rib.

In one implementation, a pressurized surface in contact with the pressurizing inclined surface may be formed at a top surface of the elastic rib.

In one implementation, an end of the elastic rib may have an inserted protrusion inserted into the space defined between the blocking ribs.

In one implementation, predetermined spacings may be defined between the inserted protrusion and the blocking rib and between the inserted protrusion and the pressed portion body, respectively.

In one implementation, the support body may include a vertically extending groove defining an ascending and descending space as a top surface thereof is opened, and a support surface forming a bottom surface of the vertically extending groove, and the pressurized portion may include a pressurized portion body inserted into the vertically extending groove in an ascendable and descendable manner, and an elastic rib elastically supporting the pressurized portion body with respect to the support surface.

In one implementation, the pressurized portion body may be formed with a pressurized surface forming an inclined surface parallel to the pressurizing inclined surface.

In one implementation, the vertically extending groove may have a locking groove having a length corresponding to an ascending and descending distance of the pressurized portion body defined in an inner circumferential surface thereof, and a locking protrusion inserted into the locking groove and restricted in the ascending and descending distance may be formed on the pressurized portion body.

### [Advantageous Effects]

According to the laundry treating apparatus according to the embodiment of the present disclosure, the installed state of the filter that filters the lint that occurs during the laundry treatment may be maintained.

Further, according to the laundry treating apparatus according to the embodiment of the preset disclosure, the lint loaded in the filter, which filters the lint that occurs during the laundry treatment, may be compressed inside the filter to secure the flow channel of the filter.

Further, according to the laundry treating apparatus according to the embodiment of the preset disclosure, the lint may be compressed inside the filter by improving the structure of the filter that filters the lint that occurs during the laundry treatment.

### [Brief Description of the Drawings]

FIG. 1 is a perspective view showing an outer appearance of a laundry treating apparatus according to an embodiment of the present disclosure.
FIG. 2 is a simplified diagram showing an internal structure of a laundry treating apparatus according to an embodiment of the present disclosure.
FIG. 3 is a perspective view showing a mounted state of a filter according to an embodiment of the present disclosure.
FIG. 4 is a perspective view showing a filter according to an embodiment of the present disclosure.
FIG. 5 is an exploded perspective view showing a filter according to an embodiment of the present disclosure.
FIG. 6 is an exploded perspective view showing an internal filter according to an embodiment of the present disclosure.
FIG. 7 is a cross-sectional view showing an internal filter according to an embodiment of the present disclosure.
FIG. 8 is a perspective view showing a door glass and a filter according to an embodiment of the present disclosure.
FIG. 9 is a cross-sectional view showing a pressurization structure according to first example of the present disclosure.
FIG. 10 is a perspective view showing a pressurization structure according to second example of the present disclosure.
FIG. 11 is a cross-sectional view showing a pressurization structure according to second example of the present disclosure.
FIG. 12 is an exploded perspective view showing a pressurization structure according to third example of the present disclosure.
FIG. 13 is a cross-sectional view showing a pressurization structure according to third example of the present disclosure.
FIG. 14 is an exploded perspective view showing a pressurization structure according to fourth example of the present disclosure.
FIG. 15 is a cross-sectional view showing a pressurization structure according to fourth example of the present disclosure.

### [Best Mode]

Hereinafter, embodiments disclosed herein will be described in detail with reference to the attached drawings. Herein, the same or similar reference numerals are assigned to the same or similar components even in different embodiments, and a description thereof is replaced with the first description. As used herein, singular expressions include plural expressions unless the context clearly dictates otherwise. Additionally, when describing the embodiment disclosed herein, when it is determined that a detailed description of related known technology may obscure the gist of the embodiment disclosed herein, the detailed description will be omitted. In addition, it should be noted that the attached drawings are only intended to facilitate understanding of the embodiment disclosed herein, and the technical idea disclosed herein should not be construed as limited by the attached drawings.

Hereinafter, a laundry treating apparatus according to an embodiment of the present disclosure will be described in detail with reference to the attached drawings.

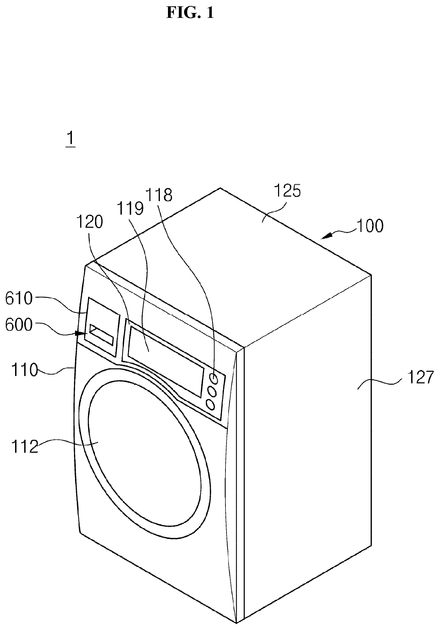

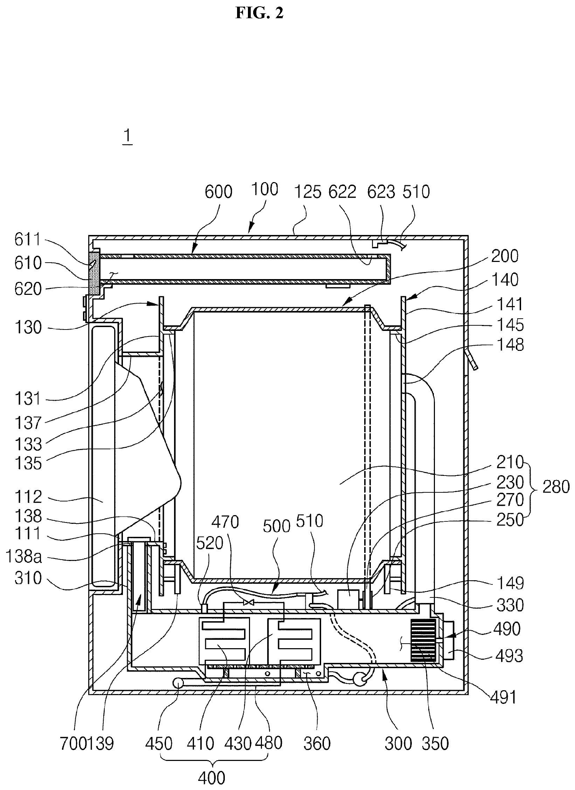

FIG. 1 is a perspective view showing an outer appearance of a laundry treating apparatus according to the present disclosure, and FIG. 2 is a simplified diagram showing an internal structure of a laundry treating apparatus according to the present disclosure.

As shown, a laundry treating apparatus 1 of the present disclosure may include a cabinet 100, a drum 200 rotatably disposed inside the cabinet to provide a space for storing laundry, a circulating duct 300 that forms a flow channel that re-supplies air discharged from the drum 200 to the drum 200, a heat exchanger assembly 400 that dehumidifies and heats air introduced into the circulation duct 300 and then re-supplies the air to the drum 200, and a driver 280 that provides a rotational force to the drum.

The cabinet 100 may include a front panel 110 that forms a front surface of the laundry treating apparatus 1, an upper panel 125 that forms a top surface, a side panel 127 that forms a side surface, and the like. In this regard, the front panel 110 may include an opening 111 defined to be in communication with the drum 200 and a door 112 pivotably coupled to the cabinet to open and close the opening 111.

In one example, the door 112 may be hinged to the front panel 110 of the cabinet 100 to open and close the opening 111. A door glass 113 may be further disposed at a center of the door 112 such that a loaded state and a washed state of the laundry loaded into the drum 200 may be checked.

In this regard, the door glass 113 may be formed to protrude in a convex shape inward of the drum 200 to allow a state of the inside of the drum 200 to be checked, and at the same time, move the laundry, which is moved to a front side of the drum 200 (i.e., the opening 111), to an inner side of the drum 200 as the drum 200 rotates.

As for the door glass 113, when the laundry rotating inside the drum 200 is moved to the front side of the drum 200 by a centrifugal force as the drum 200 rotates, the laundry may be moved back to the inner side of the drum by the protruding shape of the door glass, so that the laundry may be prevented from getting caught in a gap between the door 112 and the drum 200.

In addition, a pressurizing inclined surface 113a that pressurizes a filter 700, which will be described later, may be further formed at a lower portion of the door glass 113 that protrudes in a direction to the inner side of the drum. The pressurizing inclined surface 113a may be formed as an inclined surface extending upward from a lower portion of a rear surface of the door glass 113 in the direction to the inner side of the drum 200, and may have a gap from the filter 700 so as to be adjacent to the filter 700 but is not completely in contact with the filter 700.

In other words, when the pressurizing inclined surface 113a of the door glass 113 is in direct contact with the filter 700 itself, the door 112 may not be completely closed depending on a clearance of the filter 700 when the filter 700 is not completely inserted. Therefore, the filter 700 may further include pressurized portions 880, 880a, 880b, and 880c that are in contact with the pressure inclined surface 113a of the door glass 113 and allow the filter 700 to be seated by a predetermined elastic force in a mounting portion 138, which will be described later.

In one example, the pressurized inclined surface 113a of the door glass 113 and the pressurized portions 880, 880a, 880b, and 880c of the filter 700 will be described in detail with reference to the attached drawings after the description of the laundry treating apparatus 1.

In this regard, the front panel 110 has a control panel 120, which may include an input unit 118 that receives a control command from a user and a display 119 that outputs information such as the control command selectable by the user.

In one example, the input unit 118 may include a power supply request unit that requests power supply to the laundry treating apparatus 1, a course input unit that allows the user to select a desired course among multiple courses, and an execution request unit that requests start of the course selected by the user.

Accordingly, a command for operating the laundry treating apparatus may be input via the input unit 118, the command may be transmitted to a controller, and the controller may control each electronic component of the laundry treating apparatus to correspond thereto.

In one example, the display 119 may include at least one of a display panel that may output text and figures, and a speaker that may output a voice signal and sound.

In addition, the control panel 120 may further include the controller (not shown) or be connected to the controller. The controller may control the input unit 118 and the display 119 or control each component such as the driver 280, the heat exchanger assembly 400, a washer 500, and the like, which will be described later.

In one example, the controller may generate the command to operate the laundry treating apparatus. For example, the controller may control one or more of the driver 280 and the heat exchanger assembly 400 such that the laundry treating apparatus performs a drying cycle to remove moisture from the laundry.

The drum 200 may have a cylindrical drum body 210 with open front and rear surfaces. In this case, inside the cabinet 100, a first support 130 that forms a front surface of the drum 200 and simultaneously rotatably supports the front surface of the drum body 210, and a second support 140 that rotatably supports the rear surface of the drum body 210 may be disposed.

In this regard, the first support 130 may include a first fixed body 131 fixed inside the cabinet 100, and an inlet 133 that extends through the first fixed body 131 and allows the opening 111 and the interior of the drum body 210 to be in communication with each other.

In addition, the first support 130 may further include a first support body 135 that is disposed on the first fixed body 131 and is inserted into a front portion of the drum body 210. In this regard, the first fixed body 131 may be formed in any shape as long as the inlet 133 and the first support body 135 are formed. The first support body 135 may be formed in a shape of a pipe protruding from the first fixed body 131 toward the drum body 210. A diameter of the first support body 135 may be set to be greater than a diameter of the inlet 133 and smaller than a diameter of a front surface of the drum body 210. In this case, the inlet 133 will be located inside a space defined by the first support body 135.

In one example, the first support 130 may further include a connecting body 137 that connects the opening 111 with the inlet 133. The connecting body 137 may be formed in a shape of a pipe extending from the inlet 133 toward the opening 111. The connecting body 137 may have a mounting portion 138 that is in communication with the circulating duct 300. The mounting portion 138 is a passage that allows air inside the drum body 210 to flow to the circulating duct 300, and is able to extend through the connecting body 137. Additionally, a filter 700, which will be described later, may be inserted and installed in the mounting portion 138.

In this regard, the mounting portion 138 may allow the inlet 133 and the circulating duct 300 to be in communication with each other, may be formed in a shape of a duct, and may be formed in a shape in which one end is recessed in the inlet 133. Additionally, the mounting portion 138 may be constructed to allow air discharged from the drum 200 to be introduced thereinto, and the introduced air may pass through the mounting portion 138 and flow to the circulating duct 300.

In one example, the second support 140 may include a second fixed body 141 fixed inside the cabinet 100, and a second support body 145 that is disposed on the second fixed body 141 and is inserted into the rear surface of the drum body 210. The second support 140 has an air inlet 148 that extends through the second fixed body 141 and allows the interior of the drum body 210 and the interior of the cabinet 100 to be in communication with each other. In this case, the circulating duct 300 may connect the mounting portion 138 with the air inlet 148.

In addition, the first support 130 may have a first roller 139 that rotatably supports a circumferential surface of the drum body 210, and the second support 140 may have a second roller 149 that rotatably supports the circumferential surface of the drum body.

In one example, the drum body 210 may be rotated by a rotational force transmitted from the driver 280. The driver 280 may include a motor 230 fixed inside the cabinet 100, a pulley 250 rotated by the motor, and a belt 270 that connects a circumferential surface of the pulley 250 with the circumferential surface of the drum body 210.

The circulating duct 300 may include an exhaust duct 310 connected to the mounting portion 138, a supply duct 330 connected to the air inlet 148, and a connecting duct 350 that connects the exhaust duct with the supply duct.

The heat exchanger assembly 400 may be formed as various apparatuses as long as it may sequentially dehumidify and heat air introduced into the circulating duct 300. For example, heat exchanger assembly 400 may be formed as a heat pump system.

In one example, the heat exchanger assembly 400 may include a fan 490 that flows air along the circulating duct 300, a first heat exchanger (an evaporator) 410 that removes moisture from air introduced into the circulating duct 300, and a second heat exchanger (a condenser) 430 that is disposed inside the circulating duct 300 to heat air that has passed through the first heat exchanger 410.

In this regard, the fan 490 may include an impeller 491 disposed inside the circulating duct 300 and an impeller motor 493 that rotates the impeller 491. The impeller 491 may be disposed in any of the exhaust duct 310, the connecting duct 350, and the supply duct 330. In the present disclosure, a case in which the impeller 491 is disposed in the supply duct 330 will be described as an example.

In one example, the first heat exchanger 410 may be composed of multiple metal plates arranged along a width direction of the connecting duct 350 or a height direction of the connecting duct, and the second heat exchanger 430 may be composed of multiple metal plates arranged along the width direction of the connecting duct or the height direction of the connecting duct. The first heat exchanger 410 and the second heat exchanger 430 are sequentially arranged in a direction from the exhaust duct 310 to the supply duct 330 inside the connecting duct 350, and are connected to each other via a refrigerant pipe 480 that forms a circulation flow channel of a refrigerant.

In this regard, the refrigerant flows along the refrigerant pipe 480 by a compressor 450 located outside the circulating duct 300, and a pressure regulator 470 that adjusts a pressure of the refrigerant that has passed through the second heat exchanger 430 is disposed inside the refrigerant pipe 480.

In one example, the first heat exchanger 410 is a means of cooling air and evaporating the refrigerant by transferring heat of air introduced into the exhaust duct 310 to the refrigerant. The second heat exchanger 430 is a means of heating air and condensing the refrigerant by transferring heat of the refrigerant that has passed through the compressor 450 to air. In this case, when moisture contained in air passes through the first heat exchanger 410, it will collect on a bottom surface of the connecting duct 350 along a surface of the first heat exchanger 410. In this regard, to collect water removed from air passing through the first heat exchanger 410, a water collector 360 is disposed at a lower portion of the circulating duct 300.

In one example, water collected in the water collector 360 may be collected in a reservoir 600 and discharged all at once at a later time. The reservoir 600 may include a storage body 620 that is detachably disposed in the cabinet 100 and provides a space for storing water, and a water inlet 622 that extends through the storage body 620 to allow water discharged from a reservoir supply pipe 510 to flow into the storage body 620.

Additionally, the storage body 620 may be formed as a drawer-type tank that is extended from the cabinet 100. In this case, the front panel 110 of the cabinet should have a reservoir mounting hole into which the storage body 620 is inserted. A panel 610 is fixed to a front surface of the storage body 620. The panel 610 may form a portion of the front panel 110 by being detachably coupled to the reservoir mounting hole 138a.

In one example, the panel 610 may further have a groove 611 into which a user's hand is inserted. In this case, the panel 610 will also function as a handle for withdrawing the storage body 620 from or inserting the storage body 620 into the cabinet 100.

In this regard, the water inlet 622 may receive water discharged from a nozzle 623 fixed to the cabinet 100. The nozzle 623 may be fixed to the upper panel 125 of the cabinet so as to b e located above the water inlet 622 when the storage body 620 is inserted into the cabinet 100.

In one example, to minimize foreign substances (hereinafter, referred to as 'lint') emitted from the drum body 210 from being deposited in the first heat exchanger 410 and the second heat exchanger 430, the filter 700 that filters the lint in air may be additionally disposed.

The filter 700, as a means for filtering air flowing from the drum body 210 to the exhaust duct 310, may be detachably inserted into the exhaust duct 310 via the mounting portion 138.

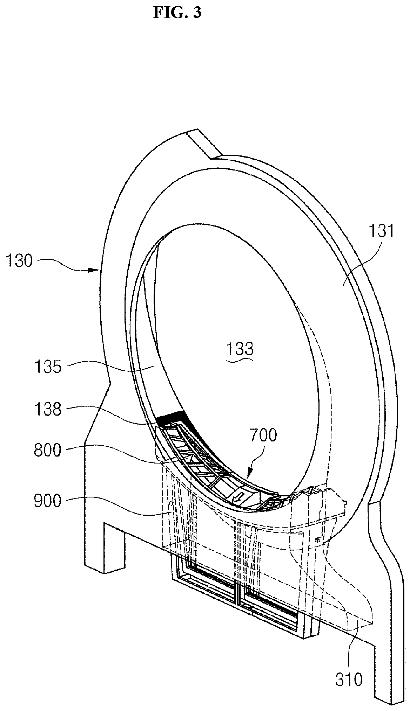

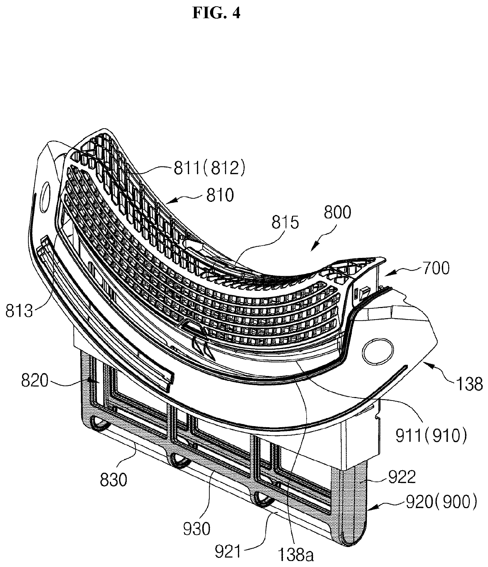

Hereinafter, a mounted state of the filter will be described in detail with reference to the attached FIGS. 3 and 4.

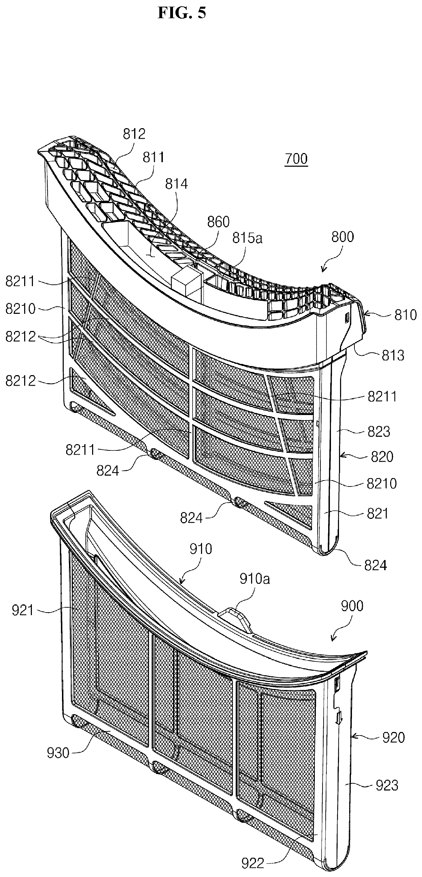

FIG. 3 is a perspective view showing a mounted state of a filter according to the present disclosure, FIG. 4 is a perspective view showing a filter according to the present disclosure, and FIG. 5 is an exploded perspective view showing a filter according to an embodiment of the present disclosure.

The filter 700 as shown in FIG. 3 is insertable into the mounting portion 138 formed at a lower portion of the connecting body 137 of the first support 130. In this regard, the mounting portion 138 may be constructed to extend through the connecting body 137 and be in communication with the circulating duct 300.

In one example, the mounting portion 138 may be constructed to allow the inlet 133 and the circulating duct 300 to be in communication with each other to provide a flow channel through which air discharged from the drum 200 first passes. The mounting portion 138 may be formed in a duct shape in the first support 130, and may provide the space in which the filter 700 is accommodated and mounted.

In one example, the filter 700 may be mounted in the mounting portion 138 to allow air to pass therethrough, but to filter the lint and the foreign substances contained in air. In this regard, the filter 700 may include an internal filter 800 that is mounted in the mounting portion 138 and filters the foreign substances from air discharged from the drum 200.

In this regard, the internal filter 800 may be mounted in the mounting portion 138 to form an inner circumferential surface of the inlet 133, and may be formed so as not to protrude from the inner circumferential surface of the inlet 133 inwardly of the inlet 133. Additionally, the internal filter 800 may be formed with an area size or a shape corresponding to those of an inlet of the mounting portion 138. As a result, a gap between the internal filter 800 and the mounting portion 138 may be minimized to prevent the foreign substances or a portion of the laundry from being input to the gap between the internal filter 800 and the mounting portion 138.

In one example, the filter 700 may further include an external filter 900 that is mounted in the mounting portion 138 under the internal filter 800 and filters the foreign substances. The external filter 900 may be disposed downstream of the internal filter 800 on a flow channel to additionally filter the lint and the foreign substances that the internal filter 800 was not able to filter.

Therefore, the filter 700 may more reliably remove the foreign substances such as the lint from air discharged from the drum 200. When the external filter 900 is mounted in the mounting portion 138, it may not be exposed to the inlet 133.

In one example, the filter 700 may be prevented from deviating to the circulating duct 300 by being supported in the mounting portion 138. In this regard, at least a portion of the internal filter 800 may be accommodated in the external filter 900.

Therefore, a space occupied by the internal filter 800 and the external filter 900 may be reduced as much as possible to minimize a volume of the filter 700. Additionally, the user may be induced to withdraw the internal filter 800 and the external filter 900 as one piece or mount them in the mounting portion 138 at the same time.

In one example, the external filter 900 may include a seating body 910 mounted in the mounting portion 138, and an inserted body 920 that extends downward from the seating body 910, is at least partially inserted into the mounting portion 138, and at the same time, accommodates an accommodated body 820 of the internal filter 800 therein.

In this regard, the seating body 910 may include an open surface at the top through which air and the foreign substances may be introduced, and may include a seating base 911 that may be seated and supported at the top of the mounting portion 138. Additionally, the inserted body 920 may extend downward from an inner circumferential surface of the seating base 911 and be inserted into the mounting portion 138.

In one example, the inserted body 920 may be formed in a casing shape that provides a space for the foreign substances to accumulate therein. In addition, the inserted body 920 may have a through-hole in most of an area thereof, and may have a mesh 921 that is coupled to the through-hole and is able to filter the foreign substances. The mesh 921 may be formed with a mesh member or the like, so that air may pass therethrough but the foreign substances may be filtered.

In one example, the inserted body 920 may include a first inserted body 922 that extends from a lower portion of the seating body 910 and filters the foreign substances, and a second inserted body 923 that is pivotably disposed under the first inserted body 922 and defines an insertion space into which the internal filter 800 is inserted together with the first inserted body 922.

In one example, the external filter 900 may further include a rigid portion 930 that reinforces rigidity of the first inserted body 922 and the second inserted body 923 and maintains shapes of the first inserted body 922 and the second inserted body 923 when they are inserted into the mounting portion 138. The rigid portion 930 may be formed in a shape of a rib extending in a width direction of the seating body 910, and may further serve as a hinge such that the first inserted body 922 and the second inserted body 923 may pivot.

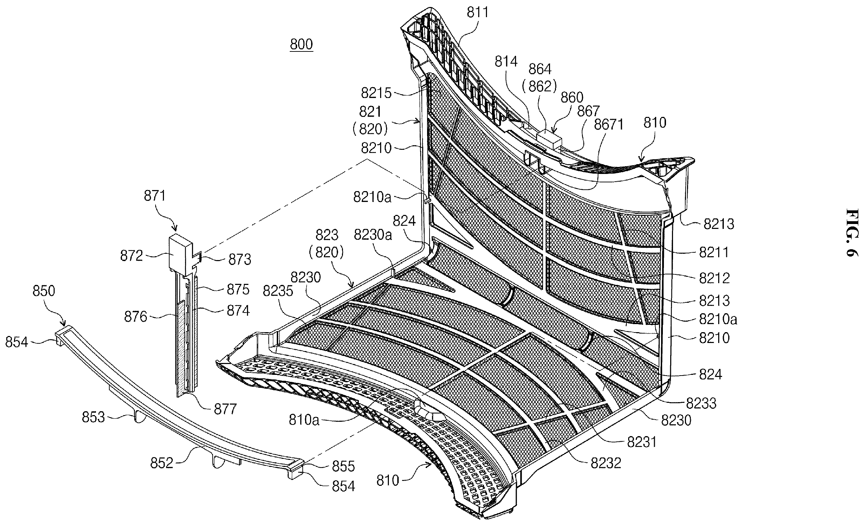

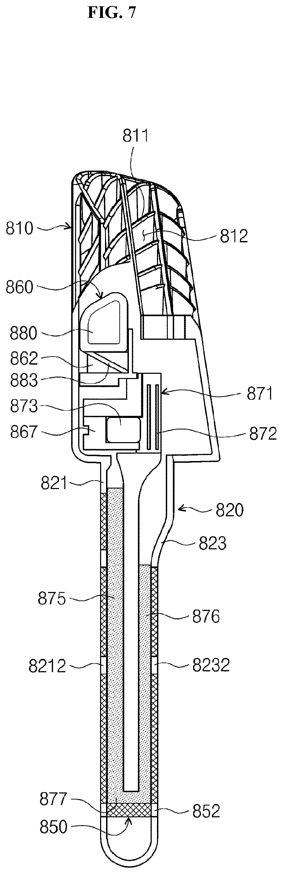

Hereinafter, with reference to the attached FIGS. 6 and 7, the internal filter 800 according to an embodiment of the present disclosure will be described in detail.

FIG. 6 is an exploded perspective view showing an internal filter according to an embodiment of the present disclosure, and FIG. 7 is a cross-sectional view showing an internal filter according to an embodiment of the present disclosure.

As shown in FIGS. 6 to 7, the internal filter 800 according to an embodiment of the present disclosure includes a support body 810 that is seated and supported in the mounting portion 138, the accommodated body 820 that extends downward from the support body 810 and is at least partially accommodated in the external filter 900, an auxiliary filter 850 installed in an inner lower portion of the accommodated body 820, and a compressing portion 860 that moves in an arc shape based on a shape of the support body to collect and accumulate the lint filtered in the accommodated body.

The support body 810 may be formed to have a shape and an area size corresponding to a shape and an area size of a mounting hole 138a and may define a portion of the inlet 133. In addition, the support body 810 may include an open surface 812 at a top surface thereof through which air and the foreign substances may be introduced, and a plurality of blocking ribs 811 disposed to shield at least a portion of the open surface 812.

In one example, the blocking ribs 811 may be disposed on the open surface 812 to block inflow of substances with great volume such as the laundry other than air or the small foreign substances such as the lint. The blocking ribs 811 may be disposed like a mesh on the open surface 812.

In one example, the top surface of the support body 810 may include a coupling portion 815a that couples the support body 810 to the mounting portion 138 or guides installation and a withdrawing direction of the internal filter 800. The area size of the support body 810 may be greater than an area size of the accommodated body 820.

Additionally, the support body 810 may include a seating surface 813 at a lower portion that extends outwardly of a top surface of the accommodated body 820. The seating surface 813 is supported at an upper portion of the mounting hole 138a to prevent the internal filter 800 from falling into the mounting hole 138a.

The accommodated body 820 may be formed in a shape of a box with an internal space defined, extend from the lower portion of the support body 810, and provide a space for the foreign substances to accumulate therein.

In one example, the accommodated body 820 may include a first accommodated body 821 that extends from the lower portion of the support body 810 and filters the foreign substances, and a second accommodated body 823 that is pivotably or detachably disposed under the first accommodated body 821 and defines the space for the foreign substances to accumulate together with the first accommodated body 821.

In this regard, as the first accommodated body 821 and the second accommodated body 823 pivot toward each other or are detached from each other, the interior of the accommodated body 820 may be opened. Therefore, the user may remove the foreign substances accumulated in the accommodated body 820 by being filtered by the first accommodated body 821 and the second accommodated body 823.

The first accommodated body 821 includes a first outer frame 8210 that extends from the lower portion of the support body 810 and is for forming the mesh. Multiple first arc-shaped ribs 8212 extending in a direction parallel to a rotation radius of the compressing portion 860, which will be described later, are formed inward of the first outer frame 8210. Additionally, a first radial rib 8211 that intersects the first arc-shaped ribs 8212 and extends in a direction parallel to an extension direction of the compressing portion 860 is formed inward of the first outer frame 8210.

In this regard, multiple spaces may be defined by the first arc-shaped ribs 8212 and the first radial rib 8211 formed inward of the first outer frame 8210, and each space may have a first mesh 8215 for filtering the lint contained in air introduced via the support body 810.

In one example, multiple first arc-shaped ribs 8212 may be formed to be parallel to the rotation radius of the compressing portion 860, and an outermost rib (i.e., a lowermost rib) may be formed as a first auxiliary filter rib 8213 to support the auxiliary filter 850. When the auxiliary filter 850 is installed between the first accommodated body 821 and the second accommodated body 823, the first auxiliary filter rib 8213 may be in contact with one side surface of the auxiliary filter 850 and come into close contact with the auxiliary filter 850.

In this regard, first and second auxiliary filter ribs 8213 and 8233 may be in contact with both side surfaces in a longitudinal direction of the auxiliary filter 850 and allow the auxiliary filter 850 and the first and second accommodated bodies 821 and 823 to be in close contact with each other, thereby preventing air introduced into the internal filter 800 and the lint contained in air from leaking to a space between the auxiliary filter 850 and the first and second accommodated bodies 821 and 823.

In addition, a first auxiliary filter support 8210a for fixing the auxiliary filter 850 may be further formed inward of the first outer frame 8210 to which the first auxiliary filter rib 8213 is connected. The first auxiliary filter support 8210a may protrude inward from the first outer frame 8210 and be inserted into a fastening groove 855 defined in the auxiliary filter 850.

The second accommodated body 823 includes a second outer frame 8230 that extends from the lower portion of the support body 810 and is for forming the mesh. Multiple second arc-shaped ribs 8232 extending in a direction parallel to the rotation radius of the compressing portion 860, which will be described later, are formed on the inward of the second outer frame 8230. Additionally, a second radial rib 8231 that intersects the second arc-shaped ribs 8232 and extends in the direction parallel to the extension direction of the compressing portion 860 is formed inward of the second outer frame 8230.

In this regard, multiple spaces may be defined by the second arc-shaped ribs 8232 and the second radial rib 8231 formed inward of the second outer frame 8230, and each space may have a second mesh 8235 for filtering the lint contained in air introduced via the support body 810.

In one example, multiple second arc-shaped ribs 8232 may be formed to be parallel to the rotation radius of the compressing portion 860, and an outermost rib may be formed as a second auxiliary filter rib 8233 to support the auxiliary filter 850. When the auxiliary filter 850 is installed between the second accommodated body 823 and the second accommodated body 823, the second auxiliary filter rib 8233 may be in contact with the other side surface of the auxiliary filter 850 and come into close contact with the auxiliary filter 850.

In addition, a second auxiliary filter support 8230a for fixing the auxiliary filter 850 may be further formed inward of the second outer frame 8230 to which the second auxiliary filter rib 8233 is connected. The second auxiliary filter support 8230a may protrude inward of the second outer frame 8230 and be inserted into the fastening groove 855 defined in the auxiliary filter 850.

In one example, a hinge rib 824 for connecting the first accommodated body 821 with the second accommodated body 823 may be further disposed under the first accommodated body 821 and under the second accommodated body 823. Accordingly, the first accommodated body 821 and the second accommodated body 823 may be coupled with each other so as to be pivotable around the hinge rib 824. Such hinge rib 824 may include a plurality of hinge ribs that connect a lower portion of the first outer frame 8210 of the first accommodated body 821 with a lower portion of the second outer frame 8230 of the second accommodated body 823.

Additionally, the hinge rib 824 described above may be constructed such that a support ribs 853 of the auxiliary filter 850, which will be described later, is seated and supported. In other words, the hinge rib 824 may be formed to be in a shape of connecting the first accommodated body 821 and the second accommodated body 823 to each other in a curved shape when the first accommodated body 821 and the second accommodated body 823 are coupled to each other, and the support ribs 853 of the auxiliary filter 850 may be seated on an inner side of a curved surface of the hinge rib 824 bent in a curved shape and fixed between the first accommodated body 821 and the second accommodated body 823.

In one example, not only the accommodated body 820 but also the support body 810 may be constructed to be divided into two pieces. The support body 810 may be constructed such that a portion where the first accommodated body 821 is coupled and a portion where the second accommodated body 823 is coupled are detachable from each other.

The auxiliary filter 850 is fastened to inner lower portions of the first accommodated body 821 and the second accommodated body 823 to filter the lint contained in air flowing to the inner lower portion of the accommodated body 820 of air introduced into the accommodated body 820 from the support body 810.

Such auxiliary filter 850 may include an auxiliary filter frame 852 that corresponds in shape to inner surfaces of the first accommodated body 821 and the second accommodated body 823 and has an auxiliary filter mesh 856 at an inner side thereof.

In this regard, the auxiliary filter mesh 856 disposed in the auxiliary filter 850 may have a mesh having a different size from each mesh formed in each of the first accommodated body 821 and the second accommodated body 823.

In this regard, the auxiliary filter frame 852 is formed in a rectangular shape with upper and lower portions open, and the auxiliary filter frame 852 is formed so as to be seated between the lower portions of the first accommodated body 821 and the second accommodated body 823.

In addition, multiple reinforcing ribs to maintain the shape of the auxiliary filter frame 852 may be formed inside the auxiliary filter frame 852, and the multiple support ribs 853 for the auxiliary filter 850 to be supported by the hinge rib 824 that connects the first accommodated body 821 with the second accommodated body 823 may be formed under the auxiliary filter frame 852. In this regard, the support rib 853 may be formed to extend from a lower portion of the reinforcing rib toward the hinge rib 824.

In one example, the auxiliary filter 850 and the auxiliary filter mesh 856 may be formed to be curved with a predetermined curvature to correspond to a rotation radius of the brush assembly 871, which will be described later. That is, the movement groove 814 to which the brush assembly 871 is movably coupled may be defined in an arc shape centered on the inlet 133.

Accordingly, the brush assembly 871 movably fastened to the movement groove 814 may rotate along a curvature of the movement groove 814. That is, the brush assembly 871 that rotates along the movement groove 814 may rotate to have a fan-shaped rotation area inside the accommodated body 820.

Therefore, when the brush assembly 871 of the compressing portion 860 rotates based on the movement of the rotatable portion 862, the third brush 877 located at the bottom of the brush assembly 871 may move along the curvature R1 of the auxiliary filter mesh and collect the lint filtered in the auxiliary filter mesh 856 by moving the same to both sides of the auxiliary filter 850.

In one example, the auxiliary filter frame 852 may be fixed and interposed between the first accommodated body 821 and the second accommodated body 823. To this end, the first auxiliary filter support 8210a and the second auxiliary filter support 8230a on which the auxiliary filter frame 852 is mounted may be formed inward of the first outer frame 8210 of the first accommodated body 821 and the second outer frame 8230 of the second accommodated body 823, respectively.

In addition, fastening portions 854 to be mounted on the first auxiliary filter support 8210a and the second auxiliary filter support 8230a are formed at both ends in the longitudinal direction of the auxiliary filter frame 852. In this regard, the first and second auxiliary filter supports 8210a and 8230a and the fastening portion 854 may be formed in a structure to be fastened with each other. When the first and second auxiliary filter supports 8210a and 8230a are formed in a shape of protrusions, the fastening portions 854 may respectively have the fastening grooves 855 for the first and second auxiliary filter supports 8210a and 8230a to be inserted.

While performing a rotation movement in a filtering space defined by the first accommodated body 821 and the second accommodated body 823, the compressing portion 860 may compress the lint filtered by the first mesh 8215 of the first accommodated body 821 and the second mesh 8235 of the second accommodated body 823 to both sides of the filtering space, thereby moving and collecting the lint.

In one example, a movement groove 814 for moving the compressing portion 860 in a longitudinal direction of the support body 810 may be defined at one side of the support body 810, and the compressing portion 860 may be constructed to rotate to both sides in a longitudinal direction of the filtering space while moving along the movement groove 814.

In this regard, the movement groove 814 may extend in the longitudinal direction of the support body 810 along the open surface 812 of the internal filter 800, and may be defined in an arc shape corresponding to the shape of the open surface 812.

In one example, the compressing portion 860 includes a rotatable portion 862 that is fastened to be slidable along the shape of the movement groove 814, is partially exposed to the outside of the movement groove 814 defined in the support body 810, and has a lower portion to which a brush assembly 871 is fastened, and the brush assembly 871 that is detachably fastened to the rotatable portion 862 and extends downward into the filtering space to collect the lint filtered in the meshes of the first accommodated body 821 and the second accommodated body 823.

In this regard, the rotatable portion 862 is constructed to reciprocate within the accommodated body 820 in a fan shape along the movement groove 814 of the support body 810. Such rotatable portion 862 includes a rotatable knob 864 extending through the movement groove 814 of the support body 810 at the top and extending upwardly of the open surface 812, a guide groove (not shown) that is movably fastened to the movement groove 814 defined in the support body 810 to guide the rotatable portion 862 to rotate in an arc shape, and a brush fastening portion 867 located inside accommodated body 820 and to which brush assembly 871 is fastened.

As the user applies a force and moves the rotatable knob 864, the rotatable portion 862 may rotate in the arc shape along a direction of formation of the movement groove 814, and the brush assembly 871 fastened to the brush fastening portion 867 may move the lint filtered and collected in the first mesh 8215 of the first accommodated body 821 and the second mesh 8235 of the second accommodated body 823 to both sides of the accommodation space while rotating in the fan shape.

In one example, the brush assembly 871 may be fastened and coupled to the brush fastening portion 867 and may be moved in association with the rotation of the rotatable portion. In addition, the brush assembly 871 may be composed of an inserted portion 872 fastened to the brush fastening portion 867, a brush body 874 extending from a lower portion of the insertion portion 872 to the filtering space of the internal filter 800, and multiple brushes disposed on the brush body 874.

In this regard, the insertion portion 872 of the brush assembly 871 may be detachably fastened to the brush fastening portion inside the internal filter, and when the compressing portion 860 is used for a long period of time, the old or damaged brush assembly 871 may be replaced.

In this regard, the insertion portion 872 is formed in a shape corresponding to an insertion space of the brush fastening portion 867, and has the brush body 874 at the bottom that extends to the filtering space defined by the first accommodated body 821 and the second accommodated body 823 of the internal filter 800.

In one example, the brush body 874 is formed to have one surface facing the first mesh 8215 of the first accommodated body 821, the other surface facing the second mesh 8235 of the second accommodated body 823, and a bottom surface facing an auxiliary filter mesh 856 of the auxiliary filter 850.

Such brush body 874 may have a first brush 875 in contact with the first mesh 8215 of the first accommodated body 821 on one surface, a second brush 876 in contact with the second mesh 8235 of the second accommodated body 823 on the other surface, and a third brush 877 in contact with the auxiliary filter mesh 856 of the auxiliary filter 850 on the bottom surface.

In one example, the first brush 875, the second brush 876, and the third brush 877 of the brush body 874 described above may be formed to be integrated with each other by insert injection during manufacturing of the brush body 874. Alternatively, the first brush 875, the second brush 876, and the third brush 877 may be attached to the brush body 874 so as to be independently detachable.

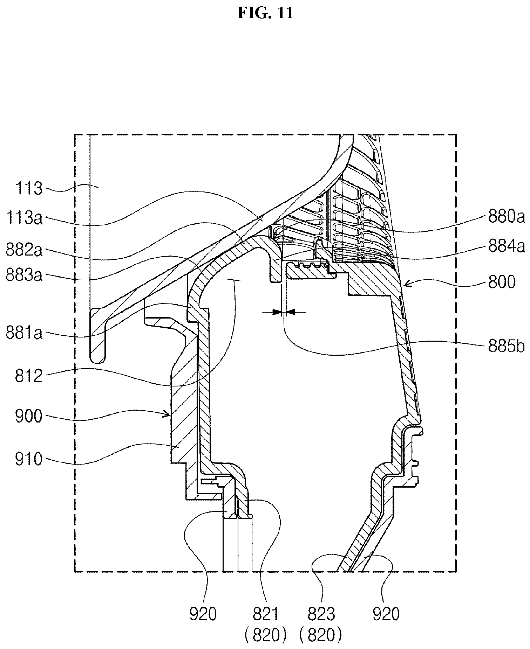

In one example, the first brush 875 and the second brush 876 may be formed to extend from the brush body 874 toward inner surfaces of the first accommodated body 821 and the second accommodated body 823, respectively, as shown in FIG. 11. The first brush 875 and the second brush 876 may move the lint filtered on surfaces of the first mesh 8215 of the first accommodated body 821 and the second mesh 8235 of the second accommodated body 823 to both sides of the internal filter 800 based on the rotation of the compressing portion 860.

Additionally, the third brush 877 of the brush body 874 may move the lint filtered on a surface of the auxiliary filter mesh 856 of the auxiliary filter 850 to both sides of the internal filter 800 based on the rotation of the compressing portion 860.

In one example, the brush assembly 871 may be elastically supported toward the auxiliary filter 850 with respect to the rotatable portion 862. That is, although not shown, a separate tension spring (not shown) that elastically supports the inserted portion 872 of the brush assembly 871 toward the auxiliary filter 850 may be further disposed in the brush fastening portion 867 of the rotatable portion 862.

That is, the inserted portion 872 of the brush assembly 871 may be fastened to the brush fastening portion 867 of the rotatable portion 862 in a radially movable manner, and the tension spring that elastically supports the inserted portion 872 in a direction away from the brush fastening portion 867 may be disposed between the brush fastening portion 867 and the inserted portion 872.

Therefore, as the rotatable portion 862 of the compressing portion 860 rotates, the brush body 874 of the brush assembly 871, which rotates together with the rotatable portion 862, may collect the lint filtered in the auxiliary filter 850 at both sides in a rotation direction of the compressing portion 860 while pressing the auxiliary filter mesh 856 of the auxiliary filter 850.

Hereinafter, the structure in which the filter 700 as described above is pressurized by and supported on the door glass 113 of the door while inserted into the mounting portion 138 will be described in detail with reference to the attached drawings.

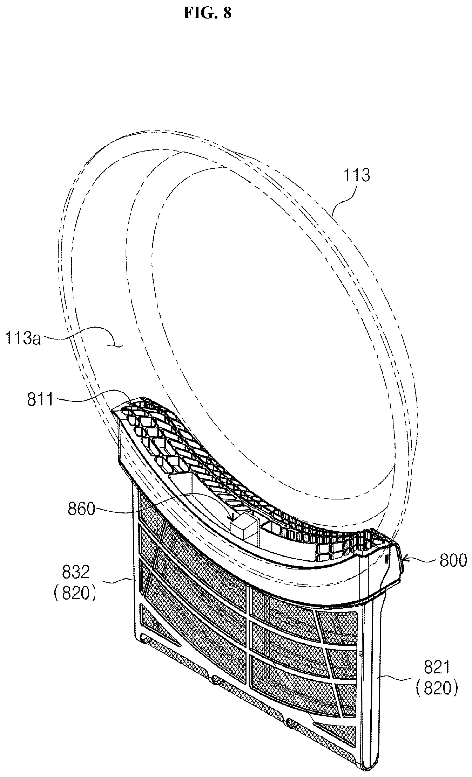

FIG. 8 is a perspective view showing a door glass and a filter according to an embodiment of the present disclosure.

As shown in FIG. 8, the filter 700 is located under the door glass 113 of the door 112 as the door 112 is closed in the state of being inserted into the mounting portion 138. In this regard, an upper portion of the internal filter 800 of the filter 700 may have the pressurized portions 880, 880a, 880b, and 880c that are in contact with the lower portion of the pressurizing inclined surface 113a of the door glass 113.

Such pressurized portions 880, 880a, 880b, and 880c may be formed anywhere on a top surface of the filter 700 adjacent to the pressurizing inclined surface 113a formed on the door glass 113 of the door 112. That is, the support body 810 of the internal filter 800 of the filter 700 may be formed in an arc shape corresponding to the inlet shape, and the pressurizing inclined surface 113a of the door glass 113 may also be formed in a cone shape protruding inward of the drum 200 corresponding to the inlet shape.

Therefore, an outer circumferential surface of the pressurizing inclined surface 113a of the door glass 113 may be located on the support body of the internal filter, and whichever the pressurized portions 880, 880a, 880b, and 880c are located on the arc shape of the support body 810 of the internal filter 800, the pressurized portions 880, 880a, 880b, and 880c may be pressurized by the pressurizing inclined surface 113a. Further, as the pressurized portions 880, 880a, 880b, and 880c are pressurized, the filter 700 where the pressurized portions 880, 880a, 880b, and 880c are located may be pressurized by and fixed to the mounting portion 138.

Additionally, in the case of filter 700, the internal filter 800 may be mounted in a structure of being inserted into the external filter 900 and then inserted into the mounting portion 138. Therefore, when the pressurized portions 880, 880a, 880b, and 880c are formed in the internal filter 800, the external filter 900 into which the internal filter 800 is inserted may also be in close contact with and be inserted into the mounting portion 138 by the pressing force of the pressurized portions 880, 880a, 880b, and 880c.

Hereinafter, the pressurized portions 880, 880a, 880b, and 880c, which are main components of the present disclosure, will be described in detail with reference to the attached drawings. In a following description, the pressurized portions 880, 880a, 880b, and 880c will be described as being located in the internal filter 800, but the filter 700 may not be composed of the internal filter 800 and the external filter 900, but may be composed of a single filter. However, when the filter 700, which is composed of the single filter, is pressurized and supported by the door glass 113, it should be considered to be included in the scope of the present disclosure.

### [First example]

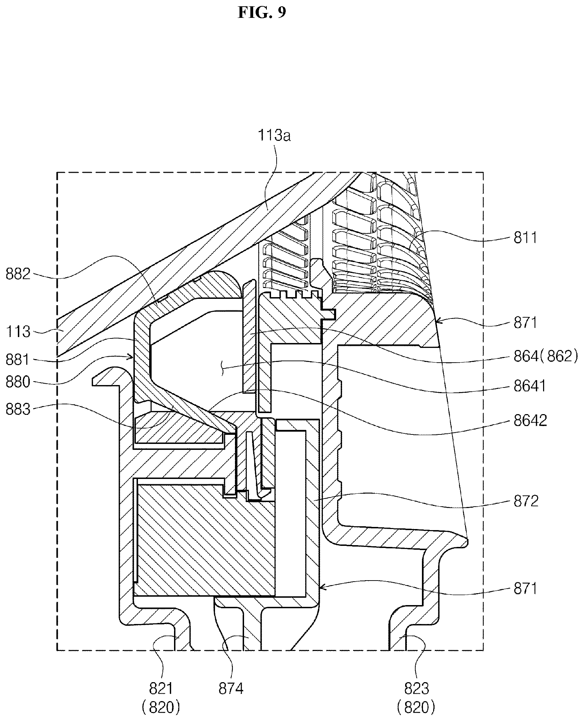

Hereinafter, with reference to FIG. 9, a pressurization structure according to first example of the present disclosure will be described in detail.

FIG. 9 is a cross-sectional view showing a pressurization structure according to first example of the present disclosure.

As shown in FIG. 9, first example of the present disclosure illustrates that the pressurized portion 880 is disposed on the rotatable portion 862 of the compressing portion 860 disposed in the internal filter 800 of the above-described embodiment. The pressurized portion 880 according to first example may be disposed on a rotatable knob 864 disposed on the rotatable portion of the compressing portion 860, and the inserted state of the filter 700 may be supported as the pressurized portion 880 disposed on the rotatable portion 862 is pressurized by the pressurizing inclined surface 113a of the door glass 113 when the door 112 is closed.

In this regard, the rotatable knob 864 may be formed to be movable along the movement groove 814 of the support body 810 as in the above-described embodiment, a vertically extending groove 8641 into which the pressurized portion 880 may be inserted in an ascendable and descendable manner may be defined at an upper portion of the rotatable knob 864, and a support surface 8642 for supporting the pressing portion 880 may be formed at a lower portion of the vertically extending groove 8641.

In one example, the pressurized portion 880 may include a pressurized portion body 881 that is inserted into the vertically extending groove 8641 of the rotatable knob 864 in the ascendable and descendable manner, and an elastic rib 883 extending in an inclined manner with respect to the support surface 8642 from a lower portion of the pressurized portion body 881.

In this regard, the elastic rib 883 of the pressurized portion body 881 exerts an elastic force in a direction in which the pressurized portion body 881 ascends with respect to the support surface 8642, and elastically supports the pressurized portion body 881 so as to always protrude from the vertically extending groove 8641.

In addition, when the pressurized portion body 881 is pressurized by the pressurizing inclined surface 113a of the door glass 113, the support surface 8642 may be pressurized with a predetermined elastic force, so that the internal filter 800 on which the support surface 8642 is formed may be elastically supported to be inserted into the mounting portion 138 with a predetermined elastic force.

Additionally, a pressurized surface 882 that is inclined corresponding to the pressurizing inclined surface 113a of the door glass 113 may be formed on a top surface of the pressurized portion body 881. Additionally, the elastic rib 883 may extend from one side at a lower portion of the body of the pressurized portion 880 and be positioned such that an end thereof is in contact with the support surface 8642.

In one example, on an outer surface of the pressurized portion body 881, a locking protrusion 8811 that is inserted into a locking groove 8641a defined in the vertically extending groove 8641 to prevent the pressurized portion body 881 from deviating from the vertically extending groove may be further formed. In this regard, the locking groove 8641a may be defined to have a predetermined length along the vertically extending groove 8641 corresponding to a distance by which the pressurized portion 880 ascends and descends.

According to the pressurized portion 880 according to first example as described above, with the filter 700 inserted into the mounting portion 138, as the door 112 pivots in the direction of closing the opening, the pressurizing inclined surface 113a of the door glass 113 may pressurize the pressurized portion 880.

In this regard, the pressurizing inclined surface 113a of the door glass 113 pressurizes the pressurized surface 882 of the pressurized portion body 881, and the pressurized portion body 881 with the pressurized surface 882 pressurized descends along the vertically extending groove 8641.

In one example, the pressurized portion body 881 is in a state of supporting the support surface 8642 by the elastic rib 883, and as the pressurized portion body 881 descends, the elastic force of the elastic rib 883 is overcame and the support surface 8642 is pressurized.

Therefore, the pressure applied to the pressurized portion 880 by the pressurizing inclined surface 113a of the door glass 113 is applied in the direction in which the internal filter 800 is inserted into the mounting portion 138, so that the filter 700 including the external filter 900 into which the internal filter 800 is inserted may be inserted into the mounting portion 138 with a predetermined pressure.

Additionally, as the door 112 is closed, the door glass 113 of the door 112 pressurizes the pressurized portion 880 of the filter 700, so that the filter 700 may be pressurized into the mounting portion 138 and remain inserted.

### [Second example]

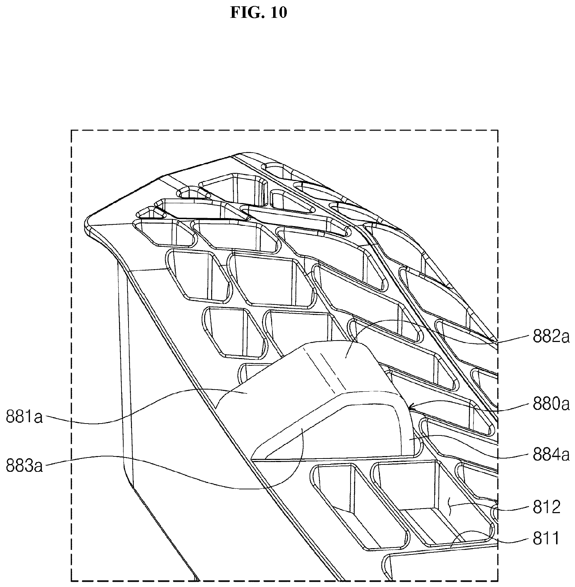

Hereinafter, a pressurization structure according to second example of the present disclosure will be described in detail with reference to FIGS. 10 and 11.

FIG. 10 is a perspective view showing a pressurization structure according to second example of the present disclosure, and FIG. 11 is a cross-sectional view showing a pressurization structure according to second example of the present disclosure.

The pressurized portion 880a according to second example of the present disclosure may be formed on the support body 810 of the internal filter 800 and pressurize the support body 810 itself to maintain the filter 700 inserted into the mounting portion 138.

As shown in FIGS. 10 and 11, the pressurized portion 880a according to second example of the present disclosure may be formed to protrude integrally with the support body 810 at one side of the open surface 812 defined in the support body 810 of the internal filter 800.

That is, at one side of the support body 810, a pressurized portion body 881a protruding in a curved manner toward the pressurizing inclined surface 113a of the door glass 113, and an inserted protrusion 884a inserted into a space between an end of the pressurized portion body 881a and the blocking rib 811 of the support body 810 may be formed.

In this regard, a tip of the pressurized portion body 881a extending from the support body 810 may be formed as an elastic rib 883a with a predetermined elastic force, and a pressurized surface 882a that is in contact with the pressurizing inclined surface 113a of the door glass 113 may be formed at a top surface of the pressurized portion body 881a (i.e., one surface facing the pressurizing inclined surface 113a).

In one example, the pressurized portion body 881a may extend and protrude from an outer surface of the support body 810 and is curved so as to be bent toward the blocking rib 811 of the support body 810, and may be inserted into the open surface 812 defined between the blocking ribs 811.

Such inserted protrusion 884a formed at an end of the pressurized portion body 881a may be spaced apart from the blocking rib 811 at a predetermined spacing 885a when being inserted into the open surface 812 of the support body 810. The spacing between the inserted protrusion 884a and the blocking rib 811 may define a space in which the pressurized portion body 881a may be elastically deformed when the pressurized surface 882a of the pressurized portion body 881a is pressurized by the pressurizing inclined surface 113a of the door glass 113.

According to the pressurized portion 880a according to second example as described above, with the filter 700 inserted into the mounting portion 138, as the door 112 pivots in the direction of closing the opening, the pressurizing inclined surface 113a of the door glass 113 may pressurize the pressurized portion 880a.

In this regard, the pressurizing inclined surface 113a of the door glass 113 pressurizes the pressurized surface 882a of the pressurized portion body 881a, and in the pressurized portion body 881a with the pressurized surface 882a pressurized, the inserted protrusion 884a is bent and inserted into the open surface 812 defined between the blocking ribs 811 as the elastic rib 883a of the pressurized portion body 881a is elastically deformed.

In one example, the pressurized portion body 881a is in a state of being elastically supported by the elastic force of the elastic rib 883a. Therefore, the pressure applied to the pressurized portion 880a by the pressurizing inclined surface 113a of the door glass 113 is applied in the direction in which the internal filter 800 is inserted into the mounting portion 138, and the filter 700 including the external filter 900 into which the internal filter 800 is inserted may be inserted into the mounting portion 138 with a predetermined pressure.

Accordingly, as the door 112 is closed, the door glass 113 of the door 112 may pressurize the pressurized portion 880a of the filter 700, so that the filter 700 may be pressurized into the mounting portion 138 and maintain the inserted state.

### [Third example]

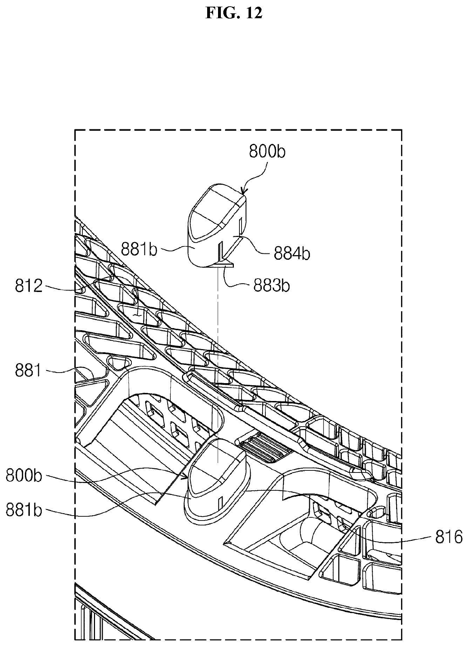

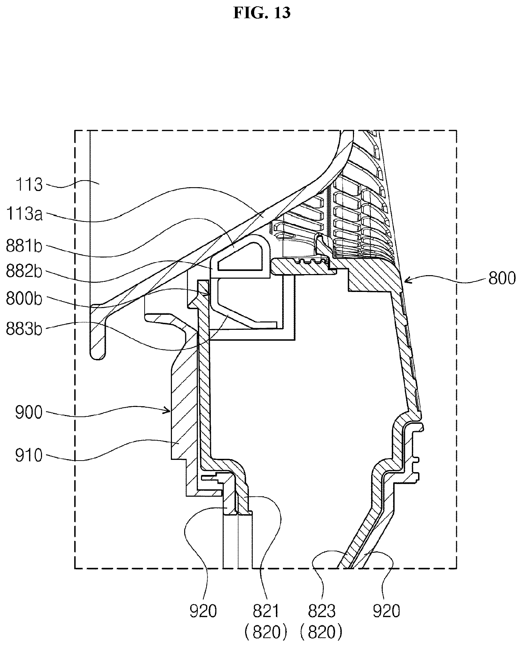

Hereinafter, a pressurization structure according to third example of the present disclosure will be described in detail with reference to FIGS. 12 and 13.

FIG. 12 is an exploded perspective view showing a pressurization structure according to third example of the present disclosure, and FIG. 13 is a cross-sectional view showing a pressurization structure according to third example of the present disclosure.

The pressurized portion 880b according to third example of the present disclosure may be disposed on the support body 810 of the internal filter 800 and pressurize the support body 810 itself to maintain the filter 700 inserted into the mounting portion 138.

As shown in FIGS. 12 and 13, the pressurized portion 880b according to third example of the present disclosure may be ascendable and descendable with respect to the support body 810 on one side of the open surface 812 defined in the support body 810 of the internal filter 800.

That is, a vertically extending groove 816 into which the pressurized portion 880b is inserted may be defined at one side of the support body 810, and the pressurized portion 880b may be supported with a predetermined elastic force and be ascendable and descendable in the vertically extending groove 816.

In one example, the vertically extending groove 816 into which the pressurized portion 880b may be inserted in the ascendable and descendable manner may be defined at one side or at a center of the support body 810, and a support surface 816a for supporting the pressurized portion 880b may be formed at a lower portion of the vertically extending groove 816.

In one example, the pressurized portion 880b may have a pressurized portion body 881b that is inserted into the vertically extending groove 816 of the support body 810 in the ascendable and descendable manner, and an elastic rib 883b extending from a lower portion of the pressurized portion body 881b in an inclined manner with respect to the support surface 816a.

In this regard, the elastic rib 883b of the pressurized portion body 881b exerts an elastic force in a direction in which the pressurized portion body 881b ascends with respect to the support surface 816a, and elastically supports the pressurized portion body 881b so as to always protrude with respect to the vertically extending groove 816.

In addition, when the pressurized portion body 881b is pressurized by the pressurizing inclined surface 113a of the door glass 113, the support surface 816a may be pressurized with a predetermined elastic force, so that the internal filter 800 where the support surface 816a is formed may be elastically supported so as to be inserted into the mounting portion 138 with a predetermined elastic force.

Additionally, a pressurized surface 882b that is inclined corresponding to the pressurizing inclined surface 113a of the door glass 113 may be formed at a top surface of the pressurized portion body 881b. Additionally, the elastic rib 883b may extend from one side at a lower portion of the body of the pressurized portion 880b and be positioned such that an end thereof is in contact with the support surface 816a.

In one example, on an outer surface of the pressurized portion body 881b, a locking rib 884b that is inserted into a locking groove (not shown) defined in the vertically extending groove 816 to prevent the pressurized portion body 881b from deviating from the vertically extending groove 816 may be further formed. In this regard, the locking groove may be formed with a predetermined length along the vertically extending groove 816 corresponding to a distance by which the pressurized portion 880b ascends and descends.

According to the pressurized portion 880b according to third example as described above, with the filter 700 inserted into the mounting portion 138, as the door 112 pivots in the direction of closing the opening, a pressurizing inclined surface 113b of the door glass 113 may pressurize the pressurized portion 880b.

In this regard, the pressurizing inclined surface 113a of the door glass 113 pressurizes the pressurized surface 882b of the pressurized portion body 881b, and the pressurized portion body 881b with the pressurized surface 882b pressurized descends along the vertically extending groove 816.

In one example, the pressurized portion body 881b is in a state of supporting the support surface 816a by the elastic rib 883b, and as the pressurized portion body 881b descends, the elastic force of the elastic rib 883b is overcame and a support surface 816b is pressurized.

Therefore, the pressure applied to the pressurized portion 880b by the pressurizing inclined surface 113a of the door glass 113 is applied in the direction in which the internal filter 800 is inserted into the mounting portion 138, and the filter 700 including the external filter 900 into which the internal filter 800 is inserted may be inserted into the mounting portion 138 with a predetermined pressure.

Additionally, as the door 112 is closed, the door glass 113 of the door 112 may pressurize the pressurized portion 880b of the filter 700, so that the filter 700 may be pressurized into the mounting portion 138 and remain inserted.

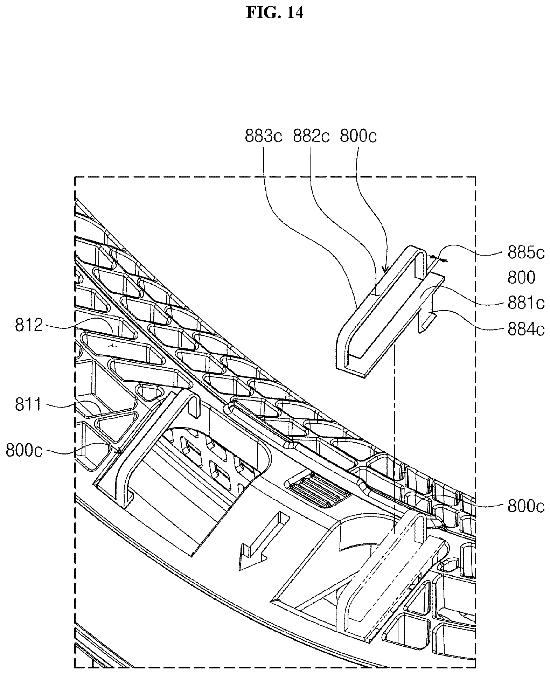

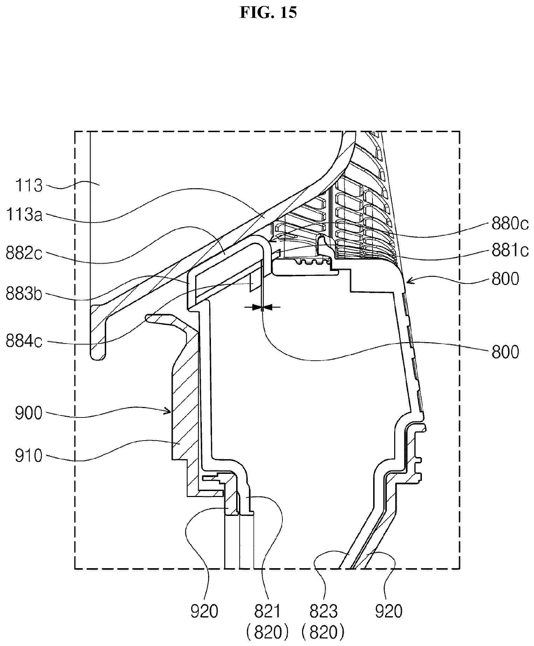

Hereinafter, a pressurization structure according to fourth example of the present disclosure will be described in detail with reference to FIGS. 14 and 15.

FIG. 14 is an exploded perspective view showing a pressurization structure according to fourth example of the present disclosure, and FIG. 15 is a cross-sectional view showing a pressurization structure according to fourth example of the present disclosure.

The pressurized portion 880c according to fourth example of the present disclosure may be coupled to the support body 810 of the internal filter 800 and pressurize the support body 810 itself to maintain the filter 700 inserted into the mounting portion 138.

As shown in FIGS. 14 and 15, the pressurized portion 880c according to fourth example of the present disclosure may be fastened between the blocking ribs 811 of the open surface 812 defined in the support body 810 of the internal filter 800.

That is, the support body 810 may be formed with the open surface 812 through which air is introduced and the blocking ribs 811 for filtering inflow of relatively large foreign substances other than air through the open surface 812. Further, the pressurized portion 880c may be fastened into a space defined by the blocking ribs 811. In this regard, the multiple blocking ribs 811 may be formed in a shape of intersecting each other, and the pressurized portion 880c may be inserted into and fixed in the space between the blocking ribs 811 intersecting each other.

In one example, the pressurized portion 880c has a pressurized portion body 881c with a length relatively greater than that of the space between the blocking ribs 811, and an elastic rib 883c that extends while being upwardly curved in a direction parallel to the pressurized portion body 881c from one end of the pressurized portion body 881c to the other end of the pressurized portion body 881c.

In this regard, locking ribs 884c extending toward a bottom of the space defined by the blocking ribs 811 are formed at both sides in a longitudinal direction of the pressurized portion body 881c. A locking protrusion (not shown) mounted under or inside the blocking rib 811 may be further formed at an end of the locking rib 884c. Accordingly, the pressurized portion body 881c may be fixed on the support body 810 as the locking rib 884c is mounted under the blocking rib 811, while being seated on the blocking rib 811.

In addition, in extending from one end to the other end of the pressurized portion body 881c in parallel with the pressurized portion body 881c, the elastic rib 883c may be formed with a pressurized surface 882c having an inclined surface parallel to the pressurizing inclined surface 113a of the door glass 113 at a top surface thereof.

In one example, a distal end of the elastic rib 883c may be formed with an inserted protrusion 887c bent downward into the space between the blocking ribs 811, and the inserted protrusion 887c may be formed to be spaced apart from the pressurized portion body 881c by a predetermined spacing 885c, and at the same time, to be spaced apart from the blocking rib 811 by a predetermined spacing 886c. Such spacings 885c and 886c of the inserted protrusion 887c define a space that may be elastically deformed when the elastic rib 883c is elastically deformed.

According to the pressurized portion 880c according to fourth example described above, with the filter 700 inserted into the mounting portion 138, as the door 112 pivots in the direction of closing the opening, a pressurizing inclined surface 113c of the door glass 113 may pressurize the pressurized portion 880c.

In this regard, the pressurizing inclined surface 113c of the door glass 113 pressurizes the pressurized surface 882c of the elastic rib 883c, and the elastic rib 883c with the pressurized surface 882c pressurized is elastically deformed in a direction of pressurizing the pressurized portion body 881c. In this regard, an end of the elastic rib 883c, which is elastically deformed, may be bent and inserted into the space defined by the blocking ribs 811, and the elastic force of the elastic rib 883c may be transmitted to the pressurized portion body 881c.

In one example, in the state in which the pressurized portion body 881c is fixed on the locking rib 884c while seated on the blocking rib 811, the support body 810 may be pressurized by the elastic force transmitted from the elastic rib 883c to the pressurized portion body.

Accordingly, the pressure applied to the pressurized portion 880c by the pressurizing inclined surface 113c of the door glass 113 may be applied in the direction in which the internal filter 800 is inserted into the mounting portion 138, and the filter 700 including the external filter 900 into which the internal filter 800 is inserted may be inserted into the mounting portion 138 with a predetermined pressure.

Additionally, as the door 112 is closed, the door glass 113 of the door 112 may pressurize the pressurized portion 880c of the filter 700, so that the filter 700 may be pressurized into the mounting portion 138 and remain inserted.

As described above, the preferred embodiments of the present disclosure have been described in detail, but a person of ordinary skill in the technical field to which the present disclosure pertains may make various modifications to the present disclosure without departing from the spirit and scope of the present disclosure as defined in the attached claims or may implement the present disclosure by combining components of the embodiments with each other. Accordingly, future changes in the embodiments of the present disclosure will not deviate from the description of the present disclosure.

## Claims

1. A laundry treating apparatus comprising:
a cabinet with an opening defined at a front side thereof;
a door configured to open and close the opening and having a door glass;
a drum having an inlet defined therein in communication with the opening and configured to accommodate laundry therein;
a driver accommodated inside the cabinet and configured to rotate the drum;
a circulating duct configured to circulate air discharged from the inlet outside the drum and re-supply air to the drum;
a heat supplier including one or more heat exchangers installed inside the circulating duct and configured to condense moisture from air or heat air;
a mounting portion defined to allow the inlet and the circulating duct to be in communication with each other to guide air inside the drum to the circulating duct; and
a filter seated in the mounting portion to filter foreign substances introduced into the circulating duct,
wherein the door glass is formed to protrude toward the drum and has a pressurizing inclined surface at a protruding lower portion thereof,
wherein the filter includes:
a support body formed to allow air to be introduced thereinto and extending in an arc shape along a shape of the inlet; and
an accommodated body extending from the support body and configured to filter air,
wherein the laundry treating apparatus further includes a pressurized portion disposed on the support body and in contact with the pressurizing inclined surface as the door is closed to pressurize the filter toward the mounting portion.

2. The laundry treating apparatus of claim 1, wherein a movement groove defined at one side of the support body and guiding a reciprocating movement in an arc shape along the shape of the support body is defined in the support body,
wherein the filter includes a compressing portion including:
a rotatable portion configured to reciprocate along a longitudinal direction of the movement groove; and
a brush assembly detachably fastened to the rotatable portion inside the support body and configured to rotate inside the accommodated body based on rotation of the rotatable portion to collect lint filtered in the accommodated body.

3. The laundry treating apparatus of claim 2, wherein the rotatable portion includes:
a rotatable knob extending outward of the support body; and
a brush fastening portion extending inward of the support body and fastened with the brush assembly,
wherein the pressurized portion is disposed on the rotatable knob.

4. The laundry treating apparatus of claim 3, wherein the rotatable knob includes:
a vertically extending groove defining an ascending and descending space as a top surface thereof is opened; and
a support surface forming a bottom surface of the vertically extending groove,
wherein the pressurized portion includes:
a pressurized portion body inserted into the vertically extending groove in an ascendable and descendable manner; and
an elastic rib elastically supporting the pressurized portion body with respect to the support surface.

5. The laundry treating apparatus of claim 4, wherein the pressurized portion body is formed with a pressurized surface forming an inclined surface parallel to the pressurizing inclined surface.

6. The laundry treating apparatus of claim 4, wherein the vertically extending groove has a locking groove having a length corresponding to an ascending and descending distance of the pressurized portion body defined in an inner circumferential surface thereof,
wherein a locking protrusion inserted into the locking groove and restricted in the ascending and descending distance is formed on the pressurized portion body.

7. The laundry treating apparatus of claim 1, wherein the support body includes:
an open surface allowing air and lint to be introduced into the support body; and
multiple blocking ribs arranged in a form of a mesh formed on the open surface.

8. The laundry treating apparatus of claim 7, wherein the pressurized portion is formed at one side of the support body to protrude integrally with the support body in a curved shape convex toward the blocking rib.

9. The laundry treating apparatus of claim 8, wherein the pressurized portion includes:
a pressurized portion body curved and protruding toward the pressurizing inclined surface; and
an inserted protrusion inserted into a space between an end of the pressurized portion body and the blocking rib.

10. The laundry treating apparatus of claim 9, wherein a tip of the pressurized portion body is formed as an elastic rib having a predetermined elastic force, and a pressurized surface in contact with the pressurizing inclined surface is formed at a top surface of the pressurized portion body.

11. The laundry treating apparatus of claim 9, wherein the inserted protrusion and the blocking rib are spaced apart from each other by a predetermined spacing.

12. The laundry treating apparatus of claim 7, wherein the pressurized portion is fastened to a space defined between the blocking ribs.

13. The laundry treating apparatus of claim 12, wherein the pressurized portion includes:
a pressurized portion body seated on the blocking rib;
a fixed rib extending from a lower portion of the pressurized portion body and fixed to the blocking rib; and
an elastic rib extending from one side of the pressurized portion body in a curved shape convex toward the pressurizing inclined surface.

14. The laundry treating apparatus of claim 13, wherein the pressurized portion body has a length relatively greater than a length of the space defined between the blocking ribs.

15. The laundry treating apparatus of claim 13, wherein a locking protrusion mounted on the blocking rib is disposed at an end of the fixed rib.

16. The laundry treating apparatus of claim 13, wherein a pressurized surface in contact with the pressurizing inclined surface is formed at a top surface of the elastic rib.

17. The laundry treating apparatus of claim 13, wherein an end of the elastic rib has an inserted protrusion inserted into the space defined between the blocking ribs.

18. The laundry treating apparatus of claim 17, wherein predetermined spacings are defined between the inserted protrusion and the blocking rib and between the inserted protrusion and the pressed portion body, respectively.

19. The laundry treating apparatus of claim 1, wherein the support body includes:
a vertically extending groove defining an ascending and descending space as a top surface thereof is opened; and
a support surface forming a bottom surface of the vertically extending groove,
wherein the pressurized portion includes:
a pressurized portion body inserted into the vertically extending groove in an ascendable and descendable manner; and
an elastic rib elastically supporting the pressurized portion body with respect to the support surface.

20. The laundry treating apparatus of claim 19, wherein the pressurized portion body is formed with a pressurized surface forming an inclined surface parallel to the pressurizing inclined surface.

21. The laundry treating apparatus of claim 19, wherein the vertically extending groove has a locking groove having a length corresponding to an ascending and descending distance of the pressurized portion body defined in an inner circumferential surface thereof,
wherein a locking protrusion inserted into the locking groove and restricted in the ascending and descending distance is formed on the pressurized portion body.
